# EUROPEAN PATENT APPLICATION

(11) **EP 1 598 124 A1**
(43) Date of publication of application: **23.11.2005**
(21) Application number: 05103676.2
(22) Date of filing: 03.05.2005
(51) Int. Cl.: B21D 24/02, F16F 9/02, F16F 9/48

(54) **Gas spring with improved overstroke feature**

(30) Priority: 20.05.2004 IT PN20040034
(71) Applicant: Bordignon Silvano S.p.A., 36061 Bassano del Grappa (Vicenza) (IT)
(72) Inventor: Bordignon, Silvano, 36027, Rosà (VI) (IT)
(74) Representative: Giugni, Valter

(57) **Abstract**

Gas spring comprising a first hollow casing having two opposite parallel bases (18,28), in which a first base (18) is provided with a hole (27), a piston (2) adapted to slide in a fluid-tight manner within said hollow casing, a rod (4) attached to the piston and passing through said hole, a first sealed chamber (6) provided inside said hollow casing as delimited by said piston and other inner walls of said hollow casing on the opposite side of said rod, a second constant-volume sealed chamber (7), a first conduit (12) connecting the interior of said first chamber with the interior of said second chamber, first valve means (13) adapted to open/close said first conduit, a third constant-volume sealed chamber (8), a third conduit (16) connecting said third chamber with said first conduit, and second valve means (17) provided in said third conduit. Said second constant-volume sealed chamber and said third constant-volume sealed chamber are kept at a low pressure and a high pressure, respectively, by a common positive displacement compressor (50).

## Description

The present invention refers to a gas spring that has been so designed, and provided with such characteristics, as to make it particularly suitable for use in conjunction with sheet-metal forming presses, or anyway adapted to separate surfaces that are operated under high contact forces, and which is further provided with some features that enable it to perform in an improved manner after the compression phase prior to the spring returning into the resting state thereof.

In view of enabling a better understanding of the actual scope of the present invention, it seems appropriate to specially point out that, when a return stroke of the piston is defined as being "controlled", this shall be understood to mean that both the starting moment of the return stroke of the piston at the end of the force application phase and the speed of the same return stroke are not free and do not depend on the sole elastic reaction of the elastic means used in the application, but are rather controlled, in a way or another, to cause the return stroke to start at a given moment and occur at a given speed.

Known in the art are kinds of gas springs that are provided with at least a piston adapted to perform as a damping member under a sudden load, and adapted to enable such piston to regain the initial working position thereof, without it returning either violently or in a delayed or braked manner to said initial position thereof. Such kinds of springs are generally known from and have been widely discussed - along with the state of the art - in the European patent application No. 1 186 795 A2 (priority date: 29^{th} August 2000), so that any further description shall be omitted here.

The solution disclosed in the above-cited patent application is fully effective, reliable and advantageous. However, it still has a drawback. In fact, even if a gas spring of this kind offers a quite effective possibility in view of regulating the return speed of the piston, the return stroke of the piston does however not prove as being fully "controllable", really, since the starting moment of the return stroke occurs immediately upon the working, i.e. pushing force on the piston rod having ceased, without any intermediate time interval of a controllable length being provided therebetween.

As all those skilled in the art are well aware of, such circumstance brings about some drawbacks that are simply unacceptable in a number of technological sectors, such as in metal forming equipment in general and sheet-metal forming presses in particular.

Furthermore, it is an often imperative pre-requisite in industrial sheet-metal forming operations that, after the piston compression phase and prior to the same piston starting to move back into the initial resting position thereof, the piston itself is not only withheld, but is on the contrary allowed to move on for a very short length of "overstroke", i.e. is allowed to be such as "sucked", i.e. drawn with a further modest onward displacement into the body of the cylinder (in the same direction as the compression displacement); such further modest onward displacement of the piston is required in view of allowing the head of the piston rod to separate from the material being processed, i.e. formed, in order to prevent said head from undesirably "impressing" the same, usually quite soft and delicate material with a typical processing or deformation mark during the separation phase.

In view of doing away with such drawbacks, some innovative technical solutions have also been disclosed, which most unfortunately are not free of a considerable extent of construction and/or operating complications.

Known from the US patent publication No. 5,435,530 is in this connection a gas spring (Figure 3), in which the pressure in the second chamber 7 of the cylinder constituting the gas spring is brought about and determined by the pressure existing in the compression chamber 22 of a second cylinder, whose piston 23 is actuated in parallel with the piston of the same spring, said compression chamber being connected with said second chamber 7 via an appropriate conduit 24, in which there is arranged a controllable shut-off valve 24A.

Duly taken into account must furthermore be in this case the added cost of said valve 24A.

Again, known from the disclosure in US 5,588,641 is a gas spring, to which there is linked up a second compression cylinder 21 that works in a synchronized manner with said gas spring; the compression chamber 6 of the latter is connected to the expansion chamber 25 of said second cylinder. In this case, however, a drawback arises from the fact that even said second cylinder is a double-acting one, thereby contributing to added construction costs and complications, although a valve is actually saved in this case as compared with the afore considered one.

Moreover, in both afore-considered cases it should be noticed that in both afore-considered cases there is an additional constraint in that the second cylinders, which are linked up to the respective springs, must be synchronized in their operation with the operation of the respective springs; it can be readily appreciated that such constraint may give rise to quite unacceptable installation-related problems.

Known from the patent application PCT/EP03/09060 is the practice of associating to the gas spring two separate, constant-volume chambers that are connected to the compression chamber of the gas spring via respective conduits, to which there are associated respective selectively actuatable valves adapted to shut off the gas flow moving along said respective conduits in either direction depending on the operating phase being carried out. In addition, prior to debouching into the interior of the compression chamber, said conduits follow a common flowpath, so that the gas contained in said common flowpath can flow into either one or the other chamber depending on the existing pressure differences.

Diffusely illustrated in the same patent publication is also the fact that, during an initial phase, the pressure in the outer low-pressure chamber tends to increase in a gradual manner until it reaches a typical value at which it stabilizes spontaneously. However, this pressure increase, albeit stabilizing at a low level, may in certain applications be such as to impair the afore-cited draw-in effect, or "overstroke", since on the other face of the piston there may prevail a pressure that sometimes is the atmospheric pressure itself, i.e. a pressure that is sufficiently low to prevent said final draw-in effect of the piston from occurring.

In view of solving this particular problem, the same patent teaches the use of a gas spring with a "double-acting" cylinder (pressure is controlled on both faces of the piston), in which the second chamber of the cylinder, opposite to the compression chamber, undergoes a controlled pressure increase in the required phase.

Such controlled pressure, as exemplified in Figure 10 of said patent publication, must however be provided by external means, equipment and/or devices, which must in turn be capable of being controlled autonomously. It can therefore be readily appreciated how this constraint is such as to unavoidably generate added construction, installation, operating and even energy costs and complications, owing to the need for a supply source of gas at a controllably high pressure to be available.

It would therefore be desirable, and it is actually a main object of the present invention, to provide a solution for creating gas springs (in particular such gas springs that do not require any use of hydraulic medium) that are specially adapted to be used in conjunction with heavy-duty metal forming applications, comprising a working piston and a cylinder adapted to slidably receive and accommodate said working piston, whose return stroke is selectively controllable in both the speed and - at least partially and under certain external conditions - in the starting moment thereof, in which the afore-cited "overstroke" or draw-in phase of the piston following the compression phase can be determined in a reliable and simple manner, and in which said gas springs are capable of being manufactured, used and operated in an easy, convenient manner at adequately low costs.

These aims, along with other features of the present invention, are reached in the gas springs that are made and operating as recited in the appended claims. In particular, in view of enabling the reader to more readily and easily understand where the actual scope of the present invention lies relative to the general prior art, it is right away pointed out that the present invention may be considered as an improvement - incorporating some further advantageous features and embodiments - of the basic solution disclosed and described in the afore-cited patent application PCT/EP03/09060.

Features and advantages of the present invention will anyway be more readily and clearly understood from the description that is given below by way of non-limiting example with reference to the accompanying drawings, in which:
- Figure 1 is a symbolical cross-sectional view of the various component parts and devices of a first embodiment of a gas spring according to the present invention;
- Figure 2 is a diagrammatical view of the course or pattern followed simultaneously by the pressures inside three respective chambers constituting said spring;
- Figures 3 and 3A are corresponding symbolical cross-sectional views of the devices in a gas spring according to a second, advantageous embodiment of the present invention, as shown in two successive operating phases thereof, respectively;
- Figures 4A through to 4E are corresponding symbolical cross-sectional views of the devices in a gas spring according to a third embodiment of the present invention, as shown in five successive operating phases thereof, respectively;
- Figure 5 is a symbolical view of the gas spring illustrated in Figure 1, as shown in a general embodiment thereof.

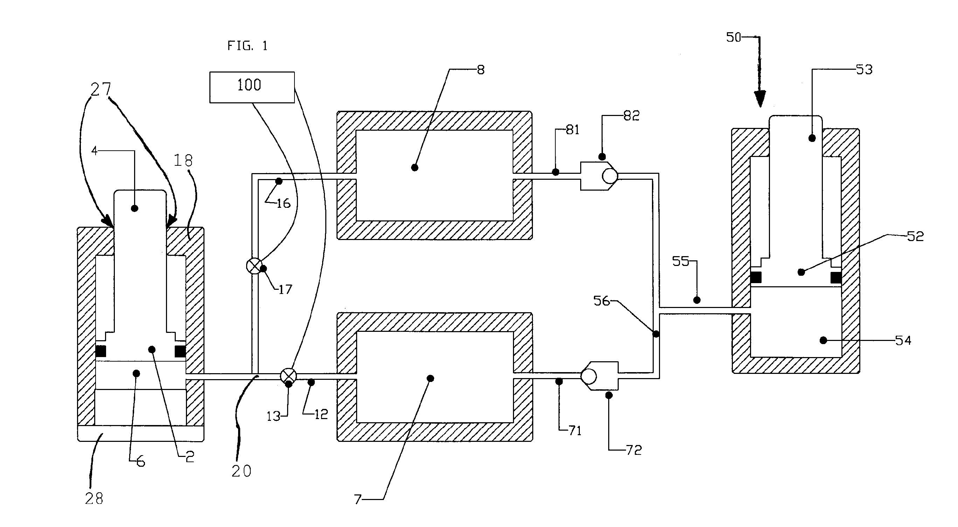

With reference to Figure 1, a gas spring according to the prior art is essentially comprised of:
- a hollow cylindrical casing 1, provided with an upper base 18 and a lower base 28,
- a piston 2 accommodated inside said hollow cylinder 1 and adapted to slide therein in a fluid-tight manner relative to the inner walls thereof, this piston being connected to a stem or rod 4 that is rigidly applied to said piston 2 on a side thereof, and is adapted to be alternately displaced inwards and outwards relative to said hollow cylinder 1 consistently with the displacement of said piston 2,
- a first sealed chamber 6 provided inside said hollow cylinder and delimited by said piston and other inner walls of said hollow cylinder, and situated on the opposite side of said rod 4 with respect to said piston
- a second constant-volume sealed chamber 7,
- a first conduit 12 connecting the interior of said first sealed chamber 6 with the interior of said second chamber 7,
- first valve means 13 associated to said first conduit 12 and adapted to open and close it selectively,
- a third constant-volume sealed chamber 8,
- a third conduit 16 connecting the interior of said third chamber 8 with said first conduit 12 at a position 20 in the conduit section situated upstream of said first valve means 13,
- second valve means 17 associated to said third conduit 16 and adapted to open and close it selectively.

As illustrated in a just symbolical manner in the Figures, there are also provided appropriate control means 100 adapted to actuate said first and said second valve means 13 and 17.

In an advantageous manner, said hollow cylinder 1 and the related piston 2 and rod 4 are not of the double-acting type, but rather of the single-acting type, this practically meaning and implying that there exists - and is fully effective and operating - a sealing effect, i.e. a fluid-tightness between said piston 2 and the inner wall of said hollow cylinder 1, whereas said same rod 4 connected at an end portion thereof to the piston 2, of which it constitutes the driving member, is adapted to slide in a non-sealed, i.e. not fluid-tight manner in an aperture 27 provided at the centre of the upper base 18 of said first cylinder 1; the guide of the rod-and-piston assembly in the displacement direction thereof is provided by the cylindrical coupling, i.e. the matching of the cylindrical shapes of the piston wall with the inner wall 10 of the cylindrical casing 1.

Now, all those skilled in the art are largely aware of the advantages offered by a single-acting cylinder over a double-acting one, so that they shall not be explained again here.

Furthermore, said third chamber 8 is filled only with gas at a usually quite high - i.e. up to 200 atm. or even higher - preloading pressure depending on the force to be sustained.

According to the invention, in view of reducing the pressure in the second chamber 7, in which the pressure tends to gradually increase up to a stabilized value owing to the above-cited filling with gas flowing in from the conduit arranged between the valves 13 and 17, there is provided a suction conduit 71, which is connected at an end portion thereof with the interior of said second chamber 7 and, at the opposite end thereof, with a positive-displacement gas compressor 50 of a traditional and, hence, single-acting type, comprising a cylinder 51 in the inner volume of which there is provided to slide in a fluid-tight manner an appropriate piston 52 associated to a rod 53 capable of extending out from a side of said cylinder.

In said suction conduit 71 there is most suitably provided a check valve 72 , that is obviously so oriented as to only enable gas flowing in from said second chamber 7 to pass therethrough, so that any possible, undesired gas leakages towards the same chamber are effectively prevented.

Of course, said compressor is provided with a suction/compression chamber 54, which is connected with the outside via a pumping conduit 55; from the outer end 56 of said pumping conduit 55 there branch off - in a parallel arrangement - both said suction conduit 71, as provided with the related above-described check valve 72, and a loading conduit 81 that leads into said third chamber 8 via a respective check valve 82 that is so oriented as to enable gas to only flow towards said same chamber 8.

The way in which the above-described gas spring operates is as follows: while disregarding the operation of the cylinder 1 and the rod 4, which work in a manner that is largely known as such in the art and are not modified to any extent in the present invention, it can be noticed that, when the rod 52 is pushed into the cylinder 51, the piston 52 moves downwards in the same cylinder 51 and, as a result, the pressure therewithin rises; the gas contained therewithin tends to escape through the pumping conduit 55, but can only flow towards and into the loading conduit 81 as enabled in this sense by the check valve 82, whereas it is prevented from also flowing towards and into the suction conduit 71 by the action of the check valve 72. As a result, the pressure in said third chamber 8 increases.

In a subsequent moment, which is not necessarily synchronized with the pressure acting on the rod 4 and the resulting displacement thereof, the rod 53 is caused to rise by the action of generally known means adapted to operate to impart a periodical and controlled motion, which shall not be described any further here. In this connection, it should only be specially noticed that the force required to cause the rod 53 and the related piston 52 to rise, i.e. move upwards, is usually quite modest, owing also to the high pressure that is initially present in the suction/compression chamber 54.

This upward motion of the rod 53 causes of course the inner volume of the chamber 54 to expand and increase, thereby generating a negative pressure therewithin that sucks in a flow of gas.

This gas can flow in only from the suction conduit 71, and - of course - not from the loading conduit 81 owing to the action of the check valve 82 provided in this conduit. As a result, part of the gas in the second chamber 7 is transferred into the suction/compression chamber 54 and, ultimately, the desired pressure decrease in said second chamber 7 is obtained.

In a subsequent phase, which may again not necessarily be synchronized with the pressure acting on the rod 4 and the related displacement thereof, the rod 53 is pushed into the cylinder 51; in a manner that is fully similar to the afore-illustrated one, the gas contained in the chamber 54 is again forced to flow towards and into said third chamber 8, thereby restoring the initial pressure value therein.

The effect is briefly obtained that the increase in the gas volume and, hence, the pressure in the second chamber 7 is compensated for and brought back to balance by gas being thereby removed from this same chamber to be pumped again into the third chamber 8 by the action of the positive-displacement compressor comprising the suction/compressor chamber 54.

Basically, said positive-displacement compressor works so as to restore the original pressure values in both chambers 7 and 8 and furthermore - as this can be most readily appreciated - there occurs no gas flow either towards the outside ambient or from the outside ambient into the pneumatic circuits of the spring.

Further to the desired effect of having the pressure restored automatically in the high-pressure chamber 8 and the gas spring being fully autonomous and independent of external equipment and devices, two advantages are practically obtained in the above-described manner, i.e.:
1) the spring does not "use up" any amount of gas, since that small amount of gas that is allowed to "leak" from the third chamber 8 into the second chamber 7, is subsequently brought back into the third chamber 8 by the effect of the operation of the compressor 50 and the check valves 72 and 82 associated therewith, via the related conduits;
2) the energy efficiency achieved is an optimum one: it should in fact be properly noticed that, although the operation of the compressor must not necessarily be synchronized with the operation of the gas spring, it however proves quite advantageous for the same load, i.e. force acting on the gas spring, and which has to be damped, to be used to also operate the compressor 50. In fact, for this compressor to be operated, only a small fraction of the force acting on the spring is actually required, considering the low suction pressure and the small, marginal amount of gas that needs being transferred from the suction/compression chamber 54 into said third chamber 8; what is more, considering the superabundant force that usually acts on the gas spring, the operation of the compressor turns practically out as being totally free of charge from an energy usage point of view.

It can also be readily appreciated that, according to the particular operating constraints and the kind of performance required, those skilled in the art will be capable to easily define in an optimum manner all operating, construction and dimensional features of both the gas springs and the compressor, as well as the various devices associated therewith.

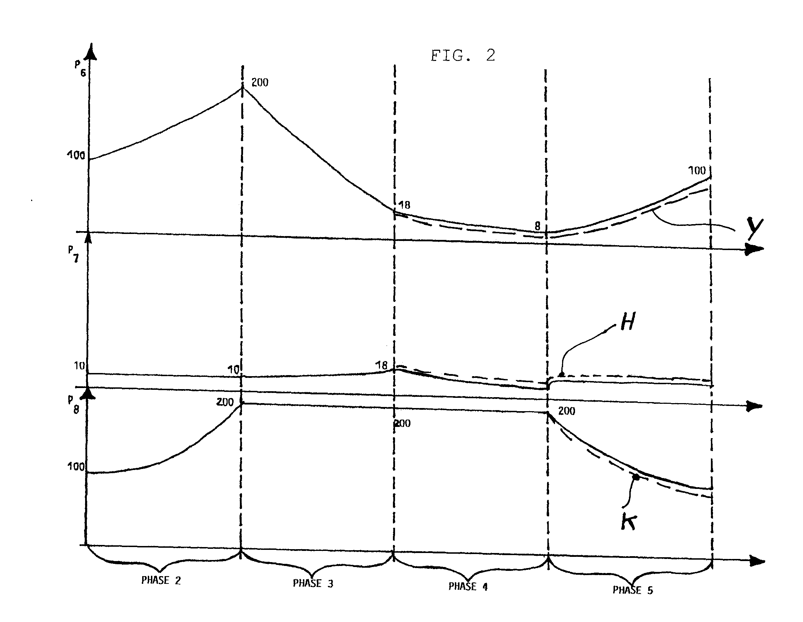

Reference should now be made to Figure 2, which practically replicates Figure 6 of the afore-cited patent application PCT/EP03/09060 showing the course followed by the pressure, i.e. the pressure pattern in the three chambers during various operating phases of the spring. Since the spring chambers performing similar functions have been indicated using the same reference numerals 6, 7 and 8 both in this patent and the above-mentioned application PCT/EP03/09060, it ensues that the graph appearing in the accompanying Figure 2 also represents the pressure patterns in the related working chambers in the respective operating phases.

Anyway, for a better understanding of the meaning of the graphs, it is suggested - for reasons of brevity - that reference be made to the description in the same above-cited patent application PCT/EP03/09060.

In correspondence to the phases 2 and 3 in the accompanying Figure 2, the pressure pattern in both the second chamber 7 and the third chamber 8 have been plotted starting from the phase 4, i.e. from the moment at which the load weighing on the rod 4 is nullified, so that this rod and the related piston 2 move upwards due to the residual pressure existing in the second chamber 7.

Since during said two phases 2 and 3 the pressure pattern in the chambers 6, 7 and 8 is fully alike, regardless of the presence of the compressor 50 and related conduits, such pattern is identified by a common continuous line (a line for each chamber, of course).

As far as the phases 4 and 5 are on the contrary concerned, in which the pistons are lifted, it should be specially remarked here that, whereas the pressure pattern in the three chambers in a gas spring according to the afore-cited patent application PCT/EP03/09060 is represented by corresponding dashed lines H, K and Y, the pattern of the corresponding pressures in a gas spring according to the present invention is indicated by corresponding continuous lines.

Quite clear and manifest is the effect that the compressor 50 has on said pressures, since not only the pressure in the second chamber 7 is lowered by the suction effect of said compressor, but also the pressure in the third chamber 8 is increased by the effect of the same compressor during the compression phase.

In all cases, the above-described solution enables the problem of a gradually unbalanced pattern of the pressures in the two chambers 7 and 8 to be solved, in that it brings back and re-establishes the gas that may possibly leak from the chamber 8 towards the chamber 7. However, circumstances may still occur, in which the pressure in the chamber 7, although kept at a controllably low level, does not yet prove low enough to allow for the desired "overstroke" effect to take place, thereby giving rise to a number of serious drawback, as already noted hereinbefore.

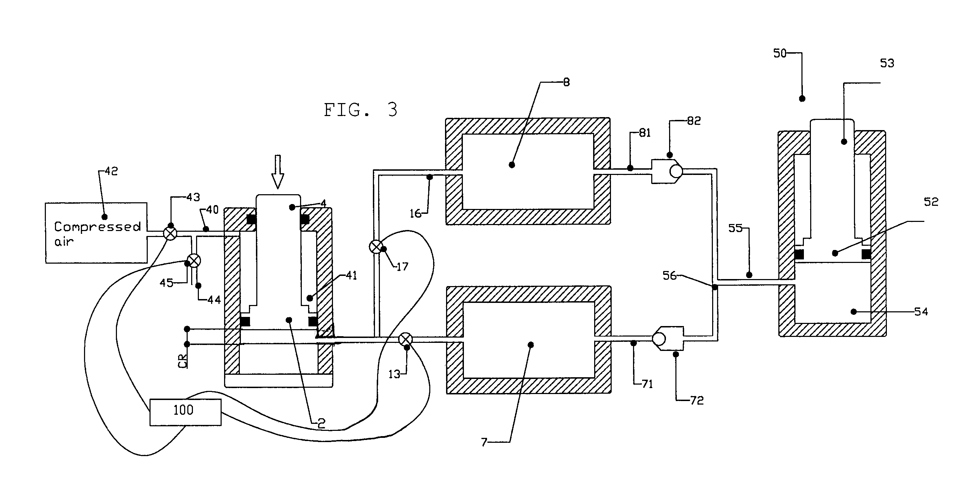

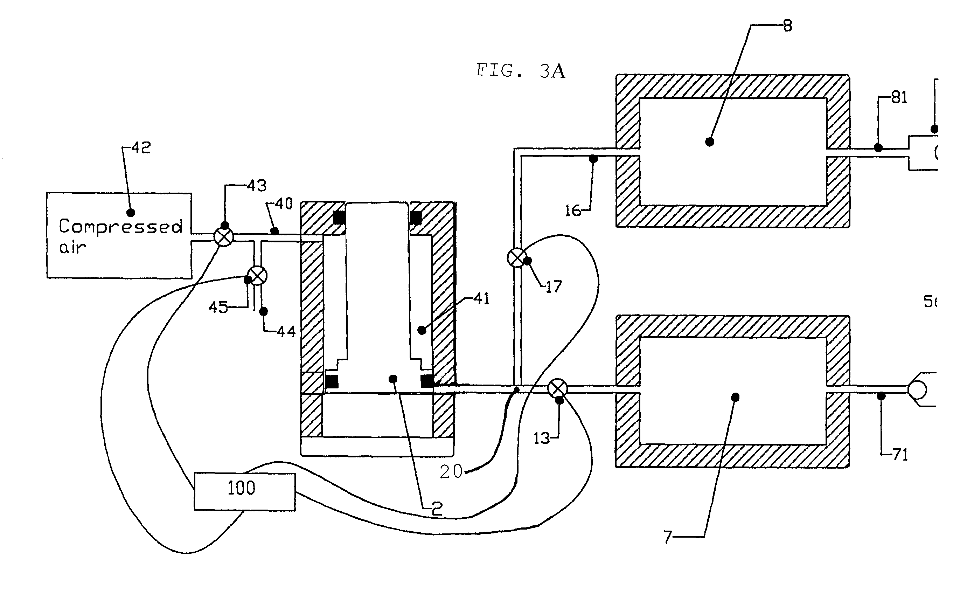

Therefore, in order to ensure that this desired "overstroke" effect will take place at a pre-established instant, a first advantageous improvement is proposed. With particular reference to Figures 3 and 3A, the gas spring according to this improved embodiment is provided with an external conduit 40 that connects the auxiliary variable-volume chamber 41, as delimited by:
- the side surface of the stem of the rod 4,
- the upper portion of the piston 2 adjacent to said rod,
- the inner surface pf said hollow cylindrical casing 1,
- the inner surface of said upper base 18,
to a supply source of pressurized gas 42, preferably compressed air, the inflow of which in said conduit 40 is controllable, i.e. adjustable by means of common, selectively controllable shut-off means 43.

Downstream of said shut-off means 43, relative to said supply source of compressed air 42, on said external conduit 40 there is provided an aperture 40 that can be opened into the outside ambient by means of a further exhaust valve 45.

In addition, said auxiliary chamber 41 is a tightly sealed one, and this implies that the piston 2 and the cylindrical casing 1 are no longer of the single-acting type (according to the definition given afore) and that, therefore, the need arises for the fluid-tight sealing effect between said rod 4 and said hole 17, through which it slides, must on the contrary be ensured.

The operation of a gas spring incorporating such kind of improvement is as follows: in the phases 2 and 3, the spring operates exactly in the same way as described afore.

In the following operation starting with the phase 3, a difference is introduced in that, between the phase 3 and the phase 4, two additional phases are included, which shall be indicated as phase 3A and phase 3B. Immediately upon the end of the phase 3, in said phase 3A the shut-off means 43 in the conduit 41 are opened, thereby letting a flow of air pass from the source 42 into the auxiliary chamber 41 and, as a result, putting this chamber under pressure. However, since the contrasting pressure in the chamber 6 is rather low, this results in the differential pressure that exists on the opposite faces of the piston 2 urging the latter against the bottom 5 of the hollow cylindrical casing 1, thereby causing it to displace for a residual, final length of downward stroke C_{R}, as schematically illustrated by a comparison of Figure 3 with Figure 3A, wherein the latter illustrates the spring in a moment following said additional phase 3A.

It can therefore be most clearly inferred that, in performing said final displacement, the rod 4 separates from the pushing means 20, thereby attaining the desired result.

The operations that take place in the following additional phase 3B are exactly the opposite of those carried out in the preceding phase 3A, i.e. said shut-off means 43 are closed and the vent valve 45 is opened. As a result, the chamber 41 is immediately brought back to the initial pressure value thereof and, most obviously, the effect of these operations will be a re-establishment - inside the chamber 6 - of the same conditions that existed there at the end of the phase 3, so that even the piston 2 will be enabled to slide upwards for the above-noted length of residual stroke C_{R}, thereby recovering the preceding position illustrated in Figure 3.

From this moment on, the work cycle of the spring goes on in the same way as already illustrated in connection with the afore-described phases 4 and 5.

It will also be readily appreciated that, in order to allow for a correctly synchronized operation of the various members of the afore-described kind of springs, the valve means 43 and 45 and, of course, also the valve means 13 and 17 shall be connected to appropriate control or actuation means 100, which must be provided so as to enable a definite sequence of signals/commands to be sent at a pre-determinable rate to the various valve means noted above.

The above-illustrated solution proves generally effective in the vast majority of the usual, ordinary applications. However, it has also some limitations that, in certain applications, may turn out as being quite penalizing, i.e.:
- a first limitation derives from the fact that taking a certain amount of gas under pressure from outside implies the provision and availability there of a corresponding supply source of gas under pressure, along with the related accessories and fittings, such as pipes, valves and the like; such a condition may not prove so easy to comply with, or not economically or constructively befitting in certain industrial contexts in which the gas spring is used;
- a second limitation is due to the fact that the return or backward displacement speed of the piston, with the valve 13 still in a closed state, depends to a substantial extent on the residual pressure existing in the variable-volume chamber 6; if this pressure is too high, the return stroke of the piston will occur at an unacceptably high speed.

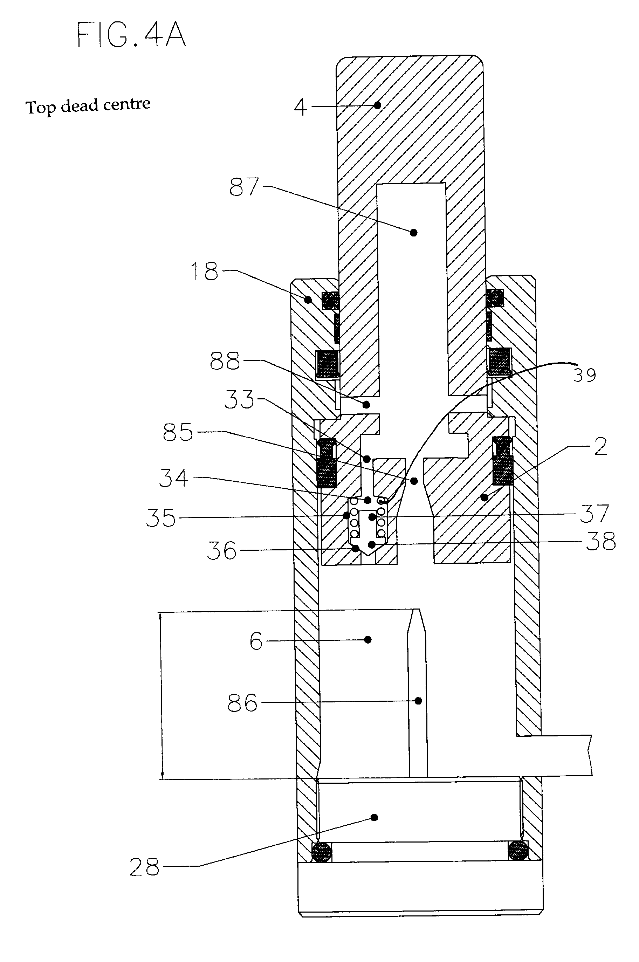

In view of doing away with these drawbacks, an advantageous improvement is therefore proposed, which - with particular reference to Figures 4A through to 4E - comprises:
- a first conduit 33 connecting said first chamber 6 with said auxiliary chamber 41, and provided with opening/closing means adapted to enable gas to flow to and from said two chambers 6 and 41 when the difference between the respective pressures is in excess of a pre-determined value, and to shut-off, i.e. close said conduit in the other phases;
- a through-aperture 85 provided in the middle section of said piston 2,
- a plug-like extension 86 firmly joined to, or integral with, the lower base 28 of the first chamber 6 and projecting orthogonally thereto for a certain length 1 - the actual extent of which shall be defined further on - into the interior of said first chamber 6

This plug-like extension has a cross-section that is substantially identical to, albeit slightly smaller than, the cross-section of said through-aperture, so that, when said piston lowers and gets closer to said base 28, the plug-like extension fits tightly - and forcedly - into said aperture, thereby practically shutting off the flow of gas passing therethrough. This tight plugging effect can be promoted by applying a unidirectionally sealing gasket - of a type largely known as such in the art - onto said plug-like extension or, conversely, inside said aperture.

Inside said rod 4 there is provided a cavity 87 in correspondence to and aligned with said through-aperture 85, so that said cavity and said through-aperture form a continuous volume. This cavity is so sized as to enable it to accommodate said extension 86 when the piston 2 is in the lowest position thereof. Finally, a permanent communication is established between said cavity 87 and said auxiliary chamber 41 by a passage 88 extending through a portion of the rod 4.

The above-mentioned opening/closing means consist substantially of a pre-rated check valve that, when the piston is in its compression phase, enables gas to be transferred from the first chamber 6 to the auxiliary chamber 41.

This check valve preferably comprises an enlarged compartment 34 provided with a substantially cylindrical outer wall 35 terminating - in the direction towards said first chamber - with a funnel-shaped portion 36.

In this compartment there is arranged a moving member 37, which is provided with a cone-shaped prominence adapted to releasably engage said funnel-shaped portion 36 so as to close the passage of the gas from said compartment. Finally, an elastic member, preferably a spiral or coil spring 39, is adapted to act upon the moving member in such a manner as to cause - under resting conditions - said moving member to close the passage of gas into the compartment and, as a result, into the second conduit 33.

It may at this point be also appropriate to point out, although this should be perfectly clear to all those skilled in the art, that even in this case said auxiliary chamber 41 is a tightly sealed one, so that the piston 2 operates under "double-acting" working conditions.

Readily apparent to those skilled in the art will at this point be the operating mode of this improvement. As a matter of fact, this improvement, as considered by itself, i.e. independently of the second chamber 7 and the third chamber 8, as well as of the compressor 50, is fully similar to what has been disclosed in the European patent application (publication) EP 1 186 795 A2, and in the pertaining description, and also operates in a fully identical manner, so that there is no point in describing it all over again here.

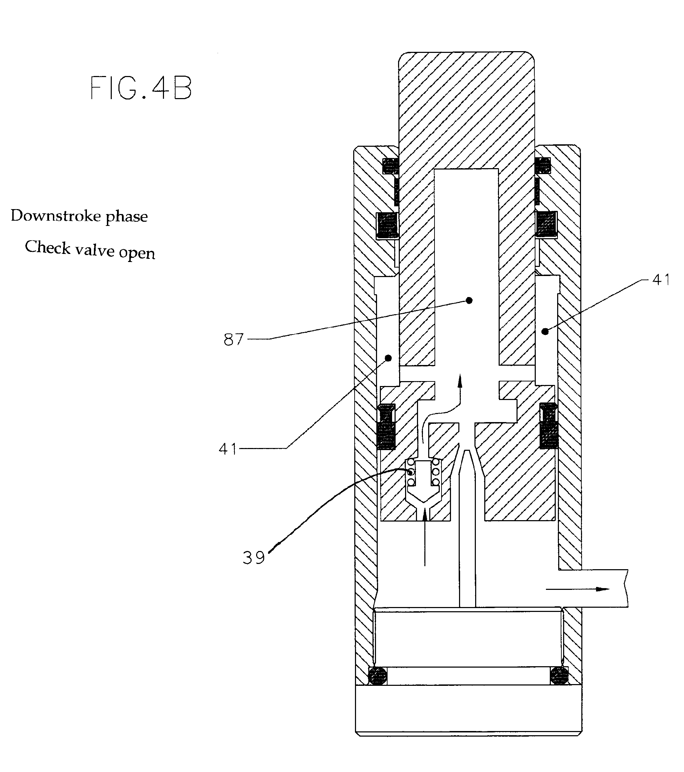

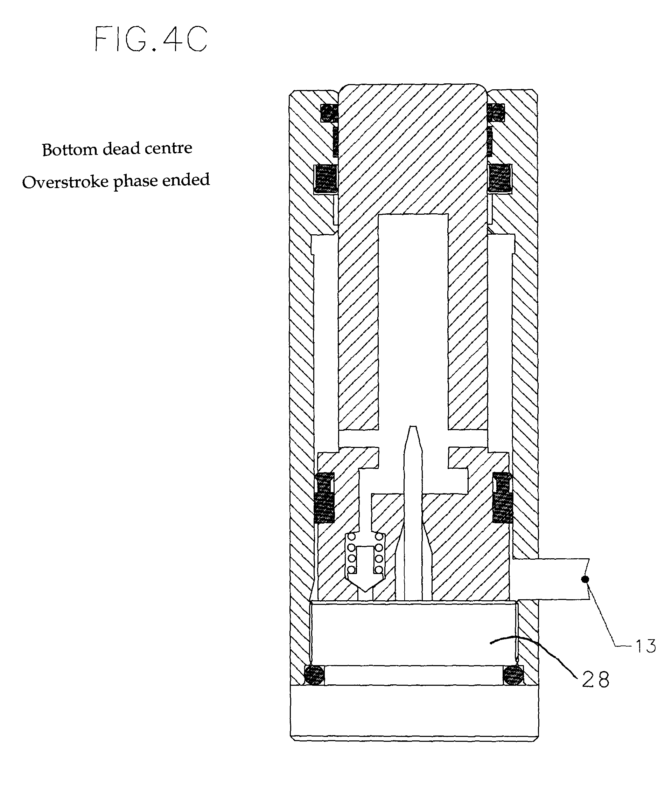

As compared to the embodiment illustrated in Figure 1, the difference lies in this case in the way in which this spring works, i.e.:
- during the downstroke/compression phase of the spring (Figure 4B), the pressure increases not only in the first chamber 6 and the third chamber 8, but also in the auxiliary, variable-volume chamber 41 located above the piston, due to the gas that flows thereinto bypassing through the check valve and said through-aperture 85; as a result, the pressures in said two chambers level off at an almost equal value;
- when the valve 13 opens (Figure 4C), only the gas that is present in the first chamber 6 is capable of flowing back into the second chamber 7, while the gas contained in the auxiliary chamber 41 remains trapped there, since it cannot escape owing to the opposing action of the check valve, and said through-aperture 85 is plugged by said plug-like extension 86.

This is effective in ensuring the desired overstroke effect of the piston, since in this case it is a sure fact that:
- if the pressures in the two chambers located at the opposite sides of the piston 2 are similar,
- and if the pressure drops drastically in one of said two chambers, owing to the valve 13 opening,
then the pressure in the opposite chamber, which is the auxiliary chamber 41 in this particular case, will anyway be fully adequate in view of imparting the desired overstroke effect to the piston.

Fully apparent will also be further advantages of such kind of spring. In fact, the upward displacement of the piston into its resting position does not in this case occur immediately upon the force acting on the rod 4 being nullified, but rather at a desired subsequent moment. This subsequent moment can on the other hand be most precisely and easily determined, owing simply to the fact that it practically coincides with the opening instant of the valve 17, which instantly establishes a communication between the high-pressure third chamber 8 and said first chamber 6, thereby causing the pressure in the latter to increase, so as to be able to immediately push the piston upwards.

The actual role of the plug-like extension 86, the through-aperture 85 and the cavity 87 will at this point be more readily understood. In fact, if the piston 2 is a solid one, except for said first conduit 33 accommodating the non-return means, the high-pressure gas contained in the third chamber 8 would immediately pass into the first chamber 6 upon opening of the valve 17. This, however, would not as a rule cause the piston 2 to abruptly and violently displace upwards, since the pressure that builds up in the first chamber 6 is the same as the one existing in the third chamber 8, which however is in turn almost the same as or slightly higher than the one existing in the auxiliary chamber 41 (owing to the latter having reached an equilibrium with the third chamber 8 during the compression phase).

As the piston moves upwards, a gradual slowing down would be observed in the return stroke thereof, since the auxiliary chamber 41 is sealed, i.e. fluid-tight towards the exterior and, hence, the upward displacement of the piston would cause the pressure therein to sensibly increase, owing to such pressure not being capable of releasing towards the first chamber 6 due to the blocking effect of the contrasting check valve.

The pressure in the auxiliary chamber 41 would therefore increase up to a value that prevents the piston from displacing upwards any further, thereby stopping it at an intermediate position, from which it cannot be caused to displace any longer, so that the operation of the whole gas spring would ultimately be blocked.

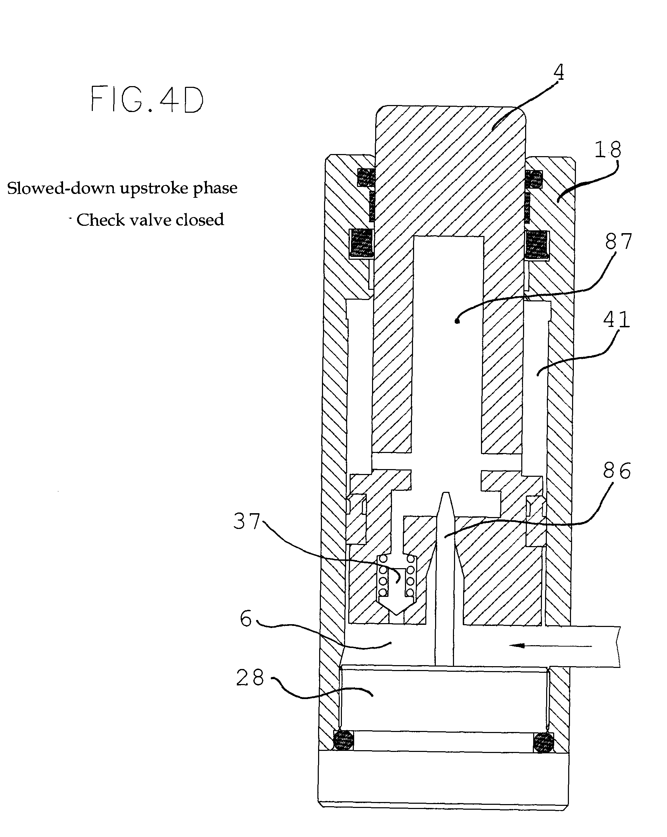

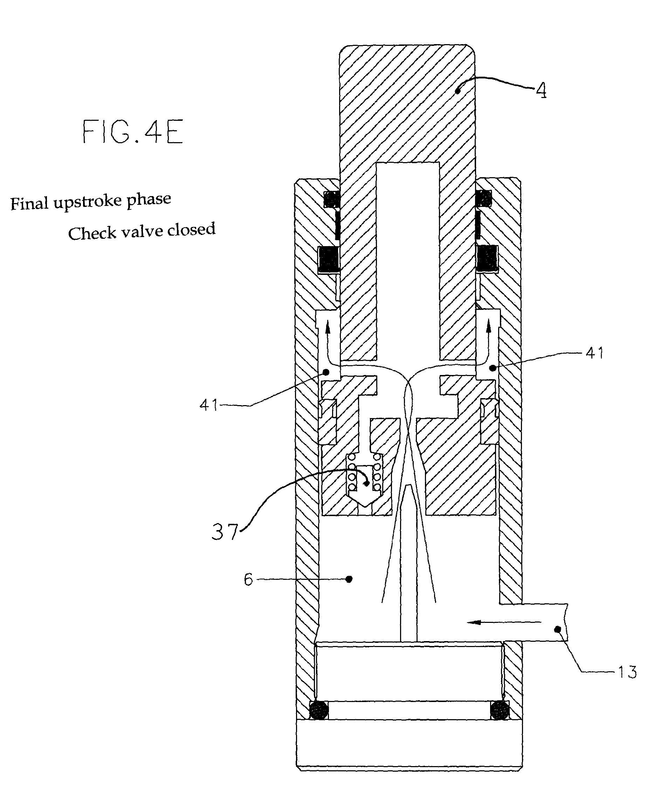

With the configuration of the above-described improvement, however, an operating mode is obtained, in which, after a short backward displacement of the piston within the return stroke thereof (Figure 4D), the through-aperture 85 provided in the same piston is cleared by said plug-like extension 86 being released therefrom (Figure 4E), so that the gas contained in the first chamber 6 is able to fr4eely flow from the latter into the auxiliary chamber 41 via said aperture 85, said cavity 87 and said passage 88.

The pressures at both sides of the piston are therefore re-equilibrated automatically and, ultimately, the piston is able to continue displacing upwards to complete its return stroke, thanks to the sole effect of the difference in the two areas on the opposite sides of the piston, on which said pressures act. In fact, the area on the side of the rod 4 is smaller than the opposite area due to the presence of the cross-section area of the same rod 4, onto which the pressure cannot of course act.

In this connection, it is furthermore to be specially noticed that even in this case the possibility is given for a substantially slowed-down operation in the return stroke of the piston to be obtained, since in the initial phase of said return stroke (Figure 4D) the piston itself is slowed down by the gradual increase in the opposing pressure in the auxiliary chamber 41, whereas, in the final phase thereof (Figure 4E), the same return stroke is not slowed down, actually, but can be reduced at will to just a short stroke by simply sizing the various devices involved, and particularly the length 1 of the plug-like extension 86, in a proper manner so that the aperture 85 can be cleared just immediately prior to the piston stopping spontaneously.

The ultimate, obvious result of both such gradual increase in the pressure in the auxiliary chamber 41, during the first part of the return stroke of the piston, and a short, but controllable further displacement to complete said return stroke, is therefore the desired effect of slowing down the whole return stroke.

The afore-described one is a preferred embodiment of the present invention that uses a positive-displacement compressor to re-equilibrate the pressures in the two chambers 6 and 7, in which said compressor is preferably operated through the use of the energy of the same tool that presses on the rod 4. It is however necessary to point specially out that, according to the present invention, any means can be actually used in view of increasing the pressure in the chamber 8, as well as decrease the pressure in the chamber 7.

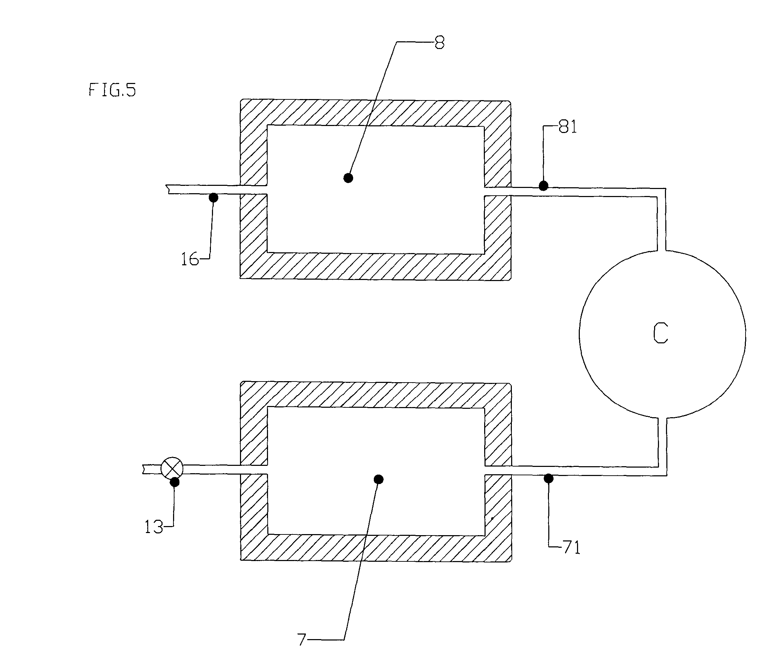

If a more compact solution making use of particular gases, such as for instance nitrogen, is desired or is considered adequate for a given application, use can be made more in a very general manner of the embodiment illustrated in Figure 5; even in this case, in fact, the gas works in a closed-loop circuit that is not open to the atmosphere, while a single means C is generally used to adjust and control the pressures in the two chambers 7 and 8. The other parts of the spring are not shown, since the operation and arrangement thereof can be implicitly inferred from the preceding Figures. Although this solution is in principle similar to the one exemplified in Figure 1, it should however be made quite clear that, in this case, said means C may be any proper closed-loop suction/compression means, such as for instance a rotary compressor.

## Claims

1. Gas spring, in particular of the type used in sheet-metal forming presses, comprising:
- a first hollow, preferably cylindrical casing (1) having two opposite parallel bases (18, 28), in which a first base (18) is provided with a hole (27),
- a piston (2) adapted to slide in a fluid-tight manner within said hollow casing, said first base (18) forming an abutment member preventing said piston from sliding out of said hollow casing,
- a rod (4) rigidly fixed with an extremity thereof to a central portion of said piston and passing through said hole (27) of said first base (18) so as to have a portion (4a) thereof protruding externally from said hollow casing,
- a first sealed chamber (6) arranged internally in said hollow cylindrical casing and delimited by said piston and other inner walls of said cylindrical hollow casing (1), on the opposite side thereof with respect to said rod (4),
- a second constant-volume sealed chamber (7)
- a first conduit (12) connecting the interior of said first chamber (6) with the interior of said second chamber (7),
- first valve means (13) associated to said first conduit (12) and adapted to open and close it selectively,
- a third constant-volume sealed chamber (8),
- a third conduit (16) connecting the interior of said third chamber (8) with said first conduit (12) at a position (20) situated between said first valve means (13) and said first chamber (6),
- second valve means (17) associated to said third conduit (16),
**characterized in that** there are provided pneumatic means (C) adapted to decrease the pressure in said second sealed chamber (7) and increase the pressure in said third chamber (8).

2. Gas spring according to claim 1, **characterized in that** said pneumatic means (C) comprise a single compressor (50) that is not open to the outside atmosphere, and that is adapted to transfer the whole amount of gas sucked from said second chamber (7) into said third chamber (8).

3. Gas spring according to claim 2, **characterized in that** said positive-displacement gas compressor (50) is comprised of:
- a second cylindrical hollow casing (51), a second piston (52) adapted to slide in a fluid-tight manner within said second cylindrical hollow casing (51) and operable by a respective second rod (53) that protrudes from said second cylindrical hollow casing (51) through a respective aperture provided in the latter, a variable-volume compression chamber (54) delimited by:
- the surface of said second piston (52) lying opposite to the portion thereof that is not connected to said second rod,
- and an inner cylindrical portion of said second cylindrical casing, which is facing said surface of said second piston,
- a pumping conduit (55) connecting the inner volume of said compression chamber (54) with the outside of said second cylindrical hollow casing (51),
- a loading conduit (81) connecting said pumping conduit (55) with said third constant-volume sealed chamber (8),
- a first check valve (82) provided in said loading conduit (81) and oriented so as to enable gas to flow towards said third sealed chamber (8),
- a suction conduit (71) debouching with an end portion thereof into said second chamber (7), while the other end portion thereof is connected to said pumping conduit (55), in which conduit is arranged a second check valve (72) oriented so as to enable the gas flowing in from said second constant-volume sealed chamber (7) to pass therethrough.

4. Gas spring according to any of the preceding claims, **characterized in that** said first hollow casing (1) and said rod (4) are arranged relative to each other to operate as a "single-acting" arrangement, so as to ensure absence of a fluid-tight seal between said hole (27) and said rod (4).

5. Gas spring according to any of the preceding claims, **characterized in that** said second hollow casing (51) and said respective second rod (53) are arranged relative to each other to operate as a "single-acting" arrangement.

6. Gas spring according to any of the claims from 1 or 2, or 3 or 5, **characterized in that**:
- said first hollow casing (1) and said rod (4) are arranged relative to each other to operate as a "double-acting" arrangement, so as to ensure a fluid-tight seal between said hole (27) and said rod (4);
- there is provided an external conduit (40) connecting outwardly the inner auxiliary chamber (41) of said hollow casing (1), which is situated on the side of said first chamber (6) lying opposite to said piston (2),
- said external conduit (40) is connected to a supply source (42) of gas under pressure via shut-off valve means (43),
- there is provided an aperture (44) that is selectively accessible to the outside ambient and is connected to said external conduit (40) in the section thereof extending between said shut-off valve means (43) and said inner auxiliary chamber (41), and
- there are provided release or exhaust valve-means (45) adapted to selectively open and/or close the access of said aperture (44) relative to the outside ambient.

7. Gas spring according to any of the preceding claims 1, 2, 3 or 5, **characterized in that**:
- said first hollow casing (1) and said rod (4) are arranged relative to each other to operate as a "double-acting" arrangement, so as to ensure a fluid-tight seal between said hole (27) and said rod (4);
- said extending through said piston (2) there is a first conduit (33), which connects said first chamber with said second chamber and is provided with non-return means (35-39), a through-passing aperture (85) being provided in the thickness of said piston,
- said rod is provided with a cavity (87) aligned with said through-aperture (85), and a passage (88) connecting said cavity (87) with said auxiliary chamber (41),
- said second base (28) of said first hollow casing is provided with a plug-like extension (86) integral therewith, and having a pre-defined length, which projects orthogonally into the interior of said first chamber (6) and is so sized as to be able to at least partially fit into said through-aperture (85) to plug it in a substantially fluid-tight manner.

8. Gas spring according to any of the preceding claims or combination thereof, **characterized in that** one or more of said valve means (13, 17, 43, 45) are connected to common actuation or control means (100).

9. Method of operation of a gas spring made according to any of the preceding claims, **characterized in that** said valve means (13, 17) are actuated according to following orderly sequence:
- closing of said first valve means (13),
- opening of said second valve means (17),
- closing of said second valve means (17),
- opening of said first valve means (13),
- wherein between said opening and said closing of said second valve means (17), said rod (4) is subjected to a compression phase,
- and subsequently to said opening of said first valve means (13), said rod (4) is subjected to a release phase occurring in the opposite way with respect to said compression phase.
